(19) **Europäisches Patentamt / European Patent Office / Office européen des brevets**

(11) **EP 3 707 815 B1**

(12) **FASCICULE DE BREVET EUROPEEN**

(45) Date de publication et mention de la délivrance du brevet:
**05.01.2022 Bulletin 2022/01**

(21) Numéro de dépôt: **18799706.9**

(22) Date de dépôt: **05.11.2018**

(51) Int Cl.:
**H02M 1/32** *(2007.01)*    **H02M 1/42** *(2007.01)*

(86) Numéro de dépôt international:
**PCT/EP2018/080167**

(87) Numéro de publication internationale:
**WO 2019/091914 (16.05.2019 Gazette 2019/20)**

(54) **PROCÉDÉ DE COMMANDE D'UN REDRESSEUR DE VIENNE TRIPHASÉ LORSQU'UN INTERRUPTEUR DE PUISSANCE EST DÉFAILLANT**

VERFAHREN ZUR STEUERUNG EINES DREIPHASIGEN VIENNA-GLEICHRICHTERS BEI FEHLERHAFTEM LEISTUNGSSCHALTER

METHOD FOR CONTROLLING A THREE-PHASE VIENNA RECTIFIER WHEN A POWER SWITCH IS FAULTY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.11.2017 FR 1760593**

(43) Date de publication de la demande:
**16.09.2020 Bulletin 2020/38**

(73) Titulaire: **Renault S.A.S.**
**92100 Boulogne-Billancourt (FR)**

(72) Inventeurs:
- MERIENNE, Ludovic
  **91190 Gif-sur-Yvette (FR)**
- KVIESKA, Pedro
  **78000 Versailles (FR)**

(74) Mandataire: **Urbillac, Chantal Corinne Annie**
**RENAULT s.a.s.**
**Sce 00267 - TCR GRA 2 36**
**1 avenue du Golf**
**78084 Guyancourt Cedex (FR)**

(56) Documents cités:

- DE OLIVEIRA EDUARDO F ET AL: "Comparative evaluation of three-phase PFC rectifiers for mains interfacing of on-board electric vehicle battery charging systems", 2015 IEEE 13TH BRAZILIAN POWER ELECTRONICS CONFERENCE AND 1ST SOUTHERN POWER ELECTRONICS CONFERENCE (COBEP/SPEC), IEEE, 29 novembre 2015 (2015-11-29), pages 1-6, XP032875160, DOI: 10.1109/COBEP.2015.7420219
- IDE P ET AL: "Operation of a three-phase/three-level-rectifier in wide range and single-phase applications", INDUSTRIAL ELECTRONICS SOCIETY, 1999. IECON '99 PROCEEDINGS. THE 25TH ANNUAL CONFERENCE OF THE IEEE SAN JOSE, CA, USA 29 NOV.-3 DEC. 1999, PISCATAWAY, NJ, USA,IEEE, US, vol. 2, 29 novembre 1999 (1999-11-29), pages 577-582, XP010366681, DOI: 10.1109/IECON.1999.816448 ISBN: 978-0-7803-5735-8
- STOGERER F ET AL: "Implementation of a novel control concept for reliable operation of a VIENNA rectifier under heavily unbalanced mains voltage conditions", 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001; [ANNUAL POWER ELECTRONICS SPECIALISTS CONFERENCE], NEW YORK, NY : IEEE, US, vol. 3, 17 juin 2001 (2001-06-17), pages 1333-1338, XP010559414, DOI: 10.1109/PESC.2001.954305 ISBN: 978-0-7803-7067-8

EP 3 707 815 B1

**Description**

La présente invention concerne un procédé de commande d'un redresseur de Vienne triphasé pour un dispositif de charge à entrée triphasée lorsqu'un interrupteur de puissance du redresseur de Vienne est défaillant.

Un tel dispositif de charge est particulièrement adapté pour une utilisation en tant que dispositif embarqué dans un véhicule automobile électrique ou hybride.

Ces véhicules sont équipés de batteries électriques haute tension et comprennent généralement des chargeurs embarqués, c'est-à-dire des dispositifs de charge des batteries électriques qui sont montés directement sur les véhicules. La fonction principale de ces dispositifs de charge est la recharge des batteries à partir de l'électricité disponible sur le réseau de distribution électrique. Les critères recherchés pour les dispositifs de charge, et tout particulièrement pour les chargeurs embarqués, sont un rendement élevé, un faible encombrement, une isolation galvanique, une bonne fiabilité, une sécurité de fonctionnement, une faible émission de perturbations électromagnétiques, et un faible taux d'harmoniques sur le courant d'entrée.

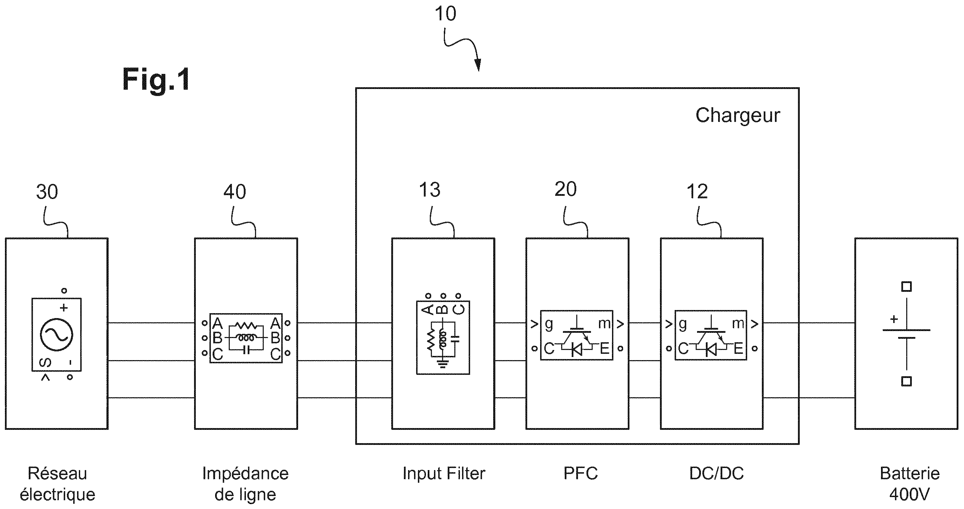

On se place ici dans la catégorie des dispositifs de charge à entrée triphasée, qui présentent une puissance de charge supérieure relativement aux dispositifs de charge à entrée monophasée. La figure 1 illustre une topologie connue d'un dispositif de charge 10 isolé, embarqué sur un véhicule électrique ou hybride pour la recharge de la batterie haute tension du véhicule à partir du réseau électrique triphasé 30 auquel le dispositif de charge embarqué 10 est connecté par l'intermédiaire de l'impédance de ligne 40 du réseau.

Afin de mettre en œuvre la fonction de conversion AC-DC avec isolation galvanique, il est connu d'utiliser un dispositif de charge 10 comprenant un premier convertisseur AC-DC, qui comporte un circuit correcteur de facteur de puissance 20 (PFC, pour « Power factor Correction ») afin de limiter les harmoniques de courant d'entrée, et un deuxième convertisseur DC-DC (courant continu-courant continu) 12, pour assurer la régulation de la charge et également pour assurer la fonction d'isolation pour la sécurité d'utilisation. Un filtre d'entrée 13 est classiquement intégré en entrée du dispositif de charge embarqué 10, en amont du circuit PFC 20 par rapport au réseau électrique triphasé 30.

Le circuit PFC 20 est commandé par un contrôleur intégré (non représenté), qui analyse et corrige en temps réel l'allure du courant par rapport à la tension. Il en déduit les erreurs de forme par comparaison avec la sinusoïde redressée de la tension et il les corrige en contrôlant la quantité d'énergie grâce à un découpage haute fréquence et un stockage d'énergie dans une inductance. Son rôle est plus précisément d'obtenir un courant non déphasé et le plus sinusoïdal possible en entrée de l'alimentation du chargeur.

Pour le circuit PFC 20, il est connu, notamment du document d'art antérieur CN104811061, de mettre en œuvre un redresseur triphasé trois niveaux à trois interrupteurs, communément connu sous le nom de redresseur triphasé de Vienne, tel que décrit dans le document d'art antérieur EP94120245 et en figure 2.

Le choix de cette topologie est en effet particulièrement avantageux du point de vue des performances pour la correction de facteur de puissance.

Dans un redresseur triphasé de Vienne 20, chaque phase de la tension d'entrée alternative triphasée 30 est reliée par des inductances respectives La, Lb, Lc à un bras de commutation 1, 2, 3 du redresseur 20, lequel est pourvu d'une cellule d'interrupteurs de puissance respectivement $M_1$, $M_2$, $M_3$.

Les cellules d'interrupteurs de puissance $M_1$, $M_2$, $M_3$ étant disposées chacune entre une inductance respective La, Lb, Lc et un point milieu O entre les deux tensions de sortie $V_{DCH}$ et $V_{DCL}$ du redresseur 20, correspondant respectivement à la tension sur un premier condensateur de sortie C1 connecté entre le point milieu O et une ligne d'alimentation positive H et à la tension sur un deuxième condensateur de sortie C2 connecté entre le point milieu O et une ligne d'alimentation négative L.

Généralement pour commander un tel redresseur de Vienne 20, on mesure les tensions et les courants ia, ib, ic en amont, ou alternativement en aval, des inductances La, Lb, Lc ainsi qu'en sortie du redresseur 20 et on utilise des boucles de régulation permettant de générer des rapports cycliques nécessaires pour régler le temps de conduction moyen des interrupteurs $M_1$, $M_2$, $M_3$.

Dans la présente description, on utilise de façon équivalente les termes cellule M1 et par simplicité de langage le terme interrupteur M1, bien que formellement, la cellule M1 comprenne un interrupteur haut M1H et un interrupteur bas M1L.

L'état de l'art sur l'application des rapports cycliques sur chaque bras de commutation d'un redresseur triphasé de Vienne consiste à utiliser l'un ou l'autre des deux interrupteurs en fonction du sens de circulation du courant sur le bras.

Cependant, lorsqu'un interrupteur d'un bras de commutation devient défaillant, et se bloque en position ouverte, il ne peut plus être commandé et donc il n'est plus possible de réaliser le courant sinusoïdal souhaité.

Pour résoudre le problème d'un composant défaillant dans un redresseur de Vienne, on connaît notamment le document US9293909 dans lequel un système additionnel permet de déconnecter le composant défaillant du système afin de pouvoir connecter un composant de secours. Cependant une telle solution ne permet pas d'assurer la continuité de fonctionnement du chargeur en cas de défaillance, une action de remplacement devant être réalisée. Ceci impose en outre l'existence d'un composant de secours, qui crée un coût supplémentaire au chargeur.

L'article IEEE "Comparative évaluation of three-phase PFC rectifiers for mains interfacing of on-board electric vehicle battery charging systems" de Eduardo de Oliveira et al., compare divers redresseurs triphasés dont le redresseur Vienna dont il est précisé qu'il est robuste à une perte de phase. Le cas de défaillance d'un transistor n'est cependant pas évoqué.

L'article IEEE "Opération of a three-phase/three-level rectifier in wide range and single-phase applications" de P. Ide et al., propose une commande modifiée d'un redresseur Vienna dans le cas où une perte de phase de phase est détectée.

L'article IEEE « Implementation of a novel control concept for reliable opération of a VIENNA rectifier under heavily unbalanced mains voltage conditions » de F. Stôgerer et al., décrit une commande de redresseur Vienna lors qu'une phase est défectueuse voire perdue, donc robuste aux conditions de tension très asymétriques sur les phases d'alimentation.

L'article suivant J. Lee, U. Choi and K. Lee, "Comparison of Tolerance Controls for Open-Switch Fault in a Grid-Connected T-Type Rectifier," IEEE Transactions on Power Electronics, vol. 30, no. 10, pp. 5810-5820, Oct. 2015, doi: 10.1109/TPEL.2014.2369414, divulgue trois méthodes de contrôle pour le cas d'une défaillance d'un interrupteur du redresseur de Vienne en mode ouvert. Dans les trois cas, on remplace les vecteurs rendus impossibles dû à la défaillance par des vecteurs alternatifs, ce qui permet de maintenir un courant sinusoïdal dans le bras défaillant.

Aussi, il existe le besoin d'une commande adaptée pour un redresseur de Vienne triphasé lorsqu'un interrupteur d'un bras de commutation est défaillant, permettant d'assurer une continuité de fonctionnement du redresseur de Vienne.

On propose un procédé de commande d'un redresseur de Vienne selon la revendication 1.

Ainsi, on peut assurer le fonctionnement du redresseur de Vienne triphasé dans un chargeur d'accumulateurs électrique, même lorsque l'un ou les deux interrupteurs commandés d'un bras de commutation sont défaillants, et ce sans qu'il ne soit nécessaire d'ajouter un composant supplémentaire.

Autrement dit, on peut augmenter la disponibilité du système de charge sans rajouter de composant supplémentaire et permettre de recharger un véhicule sur un réseau triphasé, même lorsqu'un interrupteur d'un bras de commutation est défaillant.

En particulier, le calcul des rapports cycliques à appliquer aux interrupteurs commandés haut et bas en fonction de la comparaison d'une valeur de tension de la phase associée au bras de commutation défaillant avec une première valeur de tension de phase, correspondant à la phase associée au premier bras fonctionnel, et avec une deuxième valeur de tension de phase correspondant à la phase associée au deuxième bras fonctionnel.

Ainsi, les rapports cycliques sont calculés simplement, en se basant sur des mesures de tension de phase relativement simples à obtenir.

En particulier, lorsque la valeur de tension de la phase associée au bras de commutation défaillant est comprise entre la première valeur de tension et la deuxième valeur de tension, on applique simultanément les rapports cycliques à l'interrupteur haut du premier bras fonctionnel et à l'interrupteur bas du deuxième bras fonctionnel, ledit rapport cyclique correspondant à un moins le rapport entre la tension reçue et deux fois la tension continue mesurée, tel que :

$$\alpha_{1H} = \alpha_{3L} = 1 - V_{13}/(2*V_{DC})$$

En particulier, lorsque la valeur de tension de la phase associée au bras de commutation défaillant est supérieure aux première et deuxième valeurs de tension de phase, et lorsque la différence de tension entre la première valeur de tension de phase et la deuxième valeur de tension de phase est du même signe que la valeur de tension de commande, alors on applique à l'interrupteur bas du deuxième bras fonctionnel un rapport cyclique calculé de sorte qu'il corresponde à un moins le rapport entre la tension de commande et la tension continue mesurée de sorte que :

$$\alpha_{3L} = 1 - V_{13}/V_{DC} ;$$

tandis que l'interrupteur haut du premier bras fonctionnel est maintenu fermé.

En particulier, lorsque la valeur de tension de la phase associée au bras de commutation défaillant est supérieure aux première et deuxième valeurs de tension de phase, et lorsque la différence de tension entre la première valeur de tension de phase et la deuxième valeur de tension de phase est du signe opposé à la valeur de tension de commande, alors on applique à l'interrupteur bas du premier bras fonctionnel un rapport cyclique calculé de sorte qu'il corresponde à un plus le rapport entre la tension reçue et la tension continue mesurée de sorte que :

$$\alpha_{1L} = 1 + V_{13}/V_{DC};$$

tandis que l'interrupteur haut du deuxième bras fonctionnel est maintenu fermé.

En particulier, lorsque la valeur de tension de la phase associée au bras de commutation défaillant est inférieure aux première et deuxième valeurs de tension de phase, et

lorsque la différence de tension entre la première valeur de tension de phase et la deuxième valeur de tension de phase est du même signe que la valeur de tension de commande,

alors on applique à l'interrupteur haut du premier bras fonctionnel un rapport cyclique calculé de sorte qu'il corresponde à un moins le rapport entre la tension reçue et la tension continue mesurée de sorte que :

$$\alpha_{1H} = 1 - V_{13}/V_{DC} \; ;$$

tandis que l'interrupteur bas du deuxième bras fonctionnel est maintenu fermé.

En particulier, lorsque la valeur de tension de la phase associée au bras de commutation défaillant est inférieure aux première et deuxième valeurs de tension de phase, et

lorsque la différence de tension entre la première valeur de tension de phase et la deuxième valeur de tension de phase est du signe opposé à la valeur de tension de commande,
alors on applique à l'interrupteur haut du deuxième bras fonctionnel un rapport cyclique calculé de sorte qu'il corresponde à un plus le rapport entre la tension reçue et la tension continue mesurée de sorte que :

$$\alpha_{3L} = 1 + V_{13}/V_{DC} \; ;$$

tandis que l'interrupteur bas du premier bras fonctionnel est maintenu fermé.

L'invention concerne aussi un dispositif de commande d'un redresseur de Vienne triphasé selon la revendication 8.

L'invention concerne aussi un chargeur d'accumulateur électrique destiné à être connecté à un réseau électrique triphasé, comprenant une impédance de ligne destinée à être connectée au réseau triphasée, un premier convertisseur AC-DC comprenant un redresseur de Vienne triphasé, un deuxième convertisseur DC-DC connecté à une batterie d'accumulateurs électrique, et un dispositif de commande dudit redresseur de Vienne triphasé tel que décrit dans la revendication 8.

L'invention concerne aussi un véhicule automobile comprenant un chargeur d'accumulateur électrique tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la figure 1 est une vue schématique d'un chargeur d'accumulateur électrique, selon un mode de réalisation de l'invention;
- la figure 2 est une vue schématique d'un redresseur de Vienne triphasé connu de l'art antérieur ;

- la figure 3 est une représentation des tensions de phase parcourant le redresseur de Vienne triphasé selon la figure 2.

Un chargeur d'accumulateur électrique, par exemple dans un véhicule automobile électrique ou hybride, destiné à être connecté à un réseau électrique triphasé comprend un étage de correction du facteur de puissance comprenant un redresseur de Vienne triphasé 20.

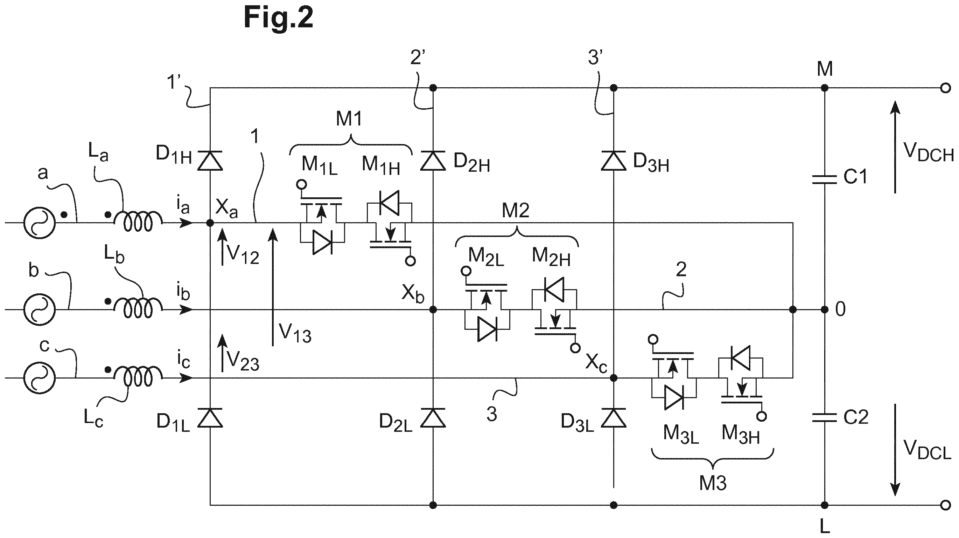

La figure 2 représente la structure d'un redresseur triphasé de Vienne 20 connu de l'art antérieur, tel qu'il est employé dans l'invention.

Le redresseur triphasé de Vienne 2 comprend trois connexions entrantes parallèles couplées chacune à une phase d'un réseau d'alimentation électrique triphasé 30 par l'intermédiaire d'une bobine d'inductance en série La, Lb, Lc, et reliée chacune à une paire d'interrupteurs $M_1$, $M_2$, $M_3$ formant un premier 1 un deuxième 2 et un troisième 3 bras de commutation du redresseur triphasé de Vienne 20.

Chaque paire d'interrupteurs $M_1$, $M_2$, $M_3$ comprend un montage série en tête bêche, aussi appelé en opposition, constitué d'un premier interrupteur correspondant $M_{1H}$, $M_{2H}$, $M_{3H}$, dit interrupteur haut $M_{1H}$, $M_{2H}$, $M_{3H}$, qui est piloté quand un courant d'entrée correspondant ia, ib, ic est positif, et d'un second interrupteur correspondant $M_{1L}$, $M_{2L}$, $M_{3L}$, dit interrupteur bas $M_{1L}$, $M_{2L}$, $M_{3L}$, qui est piloté quand le courant d'entrée correspondant est négatif. Autrement dit, on utilise un seul interrupteur piloté sur une branche de commutation pour le hachage du courant. Les interrupteurs sont formés par des composants semi-conducteurs commandés à la fermeture et à l'ouverture, tel que des transistors SiC-MOS (acronyme anglais pour Silicon Carbide-Metal *Oxide Semiconductor*), connectés en antiparallèle avec une diode. Ce type de semi-conducteurs est adapté pour des fréquences de découpage très élevées. Les interrupteurs $M_{1H}$, $M_{2H}$, $M_{3H}$ sont également nommés interrupteurs haut et les interrupteurs $M_{1L}$, $M_{2L}$, $M_{3L}$, interrupteurs bas.

Le redresseur triphasé de Vienne 20 comprend aussi trois branches parallèles 1', 2', 3' comportant chacune deux diodes $D_{1H}$ et $D_{1L}$, $D_{2H}$ et $D_{2L}$ et $D_{3H}$ et $D_{3L}$, qui forment un pont triphasé à six diodes permettant un transfert unidirectionnel de l'énergie et de redresser le courant et la tension prélevés à partir du réseau d'alimentation électrique 30 triphasé.

Chaque entrée du redresseur triphasé de Vienne 20 est connectée, par une connexion entrante parallèle respective, à un point de connexion situé entre deux diodes d'une même branche parallèles 1', 2', 3'.

Les deux extrémités communes des branches parallèles 1', 2', 3' constituent deux bornes de sorties H et L, respectivement positive H et négative L, du redresseur triphasé de Vienne 20, qui sont destinées à être couplées au dispositif DC-DC 12.

Les bras de commutation 1, 2, 3 de chaque phase sont par ailleurs connectés chacun respectivement entre le point de connexion Xa, Xb, Xc situé entre les deux diodes des première 1, deuxième 2 et troisième branches 3 et un point milieu O des tensions de sortie $V_{DCH}$ et $V_{DCL}$ du redresseur triphasé de Vienne 20, correspondant respectivement à la tension sur un condensateur de sortie C1 entre la borne de sortie positive H du redresseur triphasé et le point milieu O et à la tension sur un condensateur de sortie C2 entre le point milieu O et une borne de sortie négative L du redresseur triphasé 20.

La tension sur les condensateurs de sortie C1, C2 est asservie de façon indépendante par le convertisseur DC-DC du dispositif de charge connecté en sortie du redresseur triphasé de Vienne 20, selon la topologie globale illustré à la figure 1. Autrement dit, les tensions de sortie du redresseur triphasé de Vienne 20 sont commandées par le convertisseur DC-DC 12.

Le redresseur triphasé de Vienne 20 intercalé à l'entrée de l'alimentation du chargeur 10 assume le rôle de correction du facteur de puissance du chargeur. Un tel rôle permet d'empêcher les courants perturbateurs (harmoniques) produits par le chargeur, de circuler à travers l'impédance du réseau, située en amont du redresseur de Vienne 20.

Les bras de commutation 1, 2, 3 de chaque phase a, b, c du réseau triphasé 30 sont contrôlés aux moyens de six signaux de commande PWM (d'après l'anglais « Puise Width Modulation ») ayant un rapport cyclique variable à fréquence de découpage fixe égale à 140kHz individuellement réglé par un dispositif de commande du redresseur de Vienne triphasé (20), par exemple un organe de type FPGA pour des fréquences d'échantillonnage élevées.

Ainsi, le dispositif de commande est adapté pour déterminer les rapports cycliques des signaux de commande de commutation des interrupteurs des bras de commutation du redresseur, nécessaires pour l'asservissement des courants sinusoïdaux en entrée du redresseur.

Cependant lorsqu'un interrupteur de puissance du redresseur de Vienne devient défectueux, un bras de commutation 1, 2, 3 est alors inutilisable au risque de créer d'autres dommages tel que des courts-circuits.

Cependant, pour garantir un fonctionnement du chargeur, même lorsqu'un interrupteur de puissance est défaillant, le dispositif de commande est adapté à mettre en œuvre un procédé de commande en mode dégradé.

L'objectif de l'invention est ainsi de s'assurer que, dans le cas où un bras de commutation 1, 2, 3 est rendu inutilisable par le fait d'un ou deux de ses interrupteurs de commande, on puisse maintenir un fonctionnement du redresseur de Vienne. Ainsi, on peut indiquer à l'utilisateur l'existence d'un problème sur le chargeur de batterie tout en le laissant capable de recharger la batterie, en mode dégradé, avant d'aller procéder à la réparation. En particulier, dans le cas d'un véhicule automobile, si le chargeur devient défectueux au sens de l'invention, l'utilisateur pourra recharger son véhicule, au moins partiellement, afin de se rendre au garage pour procéder à la réparation.

Ce procédé de commande comprend une étape de détermination du bras de commutation défaillant comprenant ledit interrupteur défaillant et des deux autres bras fonctionnels.

A cet effet, on implémente des moyens de diagnostique électrique, non représentés, au niveau de la carte de commande du redresseur de Vienne, afin de détecter si un interrupteur de commande du redresseur de Vienne 20 est bloqué. De tels moyens de diagnostique ne font pas l'objet de l'invention et sont connus de l'homme du métier. De tels moyens de diagnostique permettent donc de détecter qu'un interrupteur est défaillant, et par conséquent, permettent aussi de déterminer les bras de commutation 1, 2, 3 pleinement fonctionnels.

Ensuite, on met en œuvre une étape de réception d'une valeur de tension entre les deux bras fonctionnels ($V_{13}$).

On met en œuvre aussi une étape de réception de la valeur de tension continue mesurée ($V_{DC}$), régulée de manière indépendante et autonome.

A partir de ces mesures, ainsi que des mesure des tensions de phases électriques a, b, c associées au bras de commutation 1, 2, 3, on calcule des rapports cycliques à appliquer aux interrupteurs commandés haut et bas des deux bras fonctionnels.

Afin d'expliciter cette étape de calcul des rapports cycliques, on prend pour exemple le fait qu'un interrupteur du deuxième bras de commutation 2 est défaillant. Ainsi, le bras de commutation 2 de la phase b est défaillant. Par conséquent les bras de commutation 1, 3 associées respectivement aux phases a et c sont les bras fonctionnels.

Il est bien entendu que l'invention n'est pas limitée à ce seul cas, et la transposition à un autre bras de commutation défaillant est identique à cet exemple, de sorte que le procédé peut être mis en œuvre quelque soit le bras de commutation défaillant.

Ainsi on cherche à contrôler les courants parcourant le redresseur de Vienne 20, avec un élément bloqué. Dans la topologie du chargeur, un bras bloqué ouvert n'empêche pas la circulation du courant dans les diodes rattachées à ce bras. Par exemple, avec les interrupteurs M2H et M2L bloqués ouverts, du courant peut encore circuler dans les diodes D1H ou D1L en fonction des tensions entre chaque phase.

Il faut donc créer une commande intégrant cette contrainte de ne jamais créer de chemin favorable à la circulation du courant dans le bras dont un élément est défaillant.

Dans le présent exemple de réalisation, l'un ou les interrupteurs du bras de commutation 2 sont bloqués ouverts. Dans les 2 cas, nous sommes contraints de charger avec les 2 interrupteurs du bras 2 commandés ouverts.

Pour charger correctement en utilisant les bras 1 et 3 seulement, nous allons devoir appliquer une tension $V_{13}$, dite tension de commande $V_{13}$, correspondant à une tension cible entre les deux bras de commutation 1, 3 fonctionnels issue d'un algorithme de régulation.

La tension de commande $V_{13}$ est une tension positive. Cependant, s'il fallait obtenir une tension $V_{13}$ négative, la transposition de la description de cet exemple de réalisation serait réalisée simplement par l'homme du métier, par exemple en inversant dans la description qui suit les deux bras fonctionnels 1 et 3.

Le procédé d'application prend en compte le fait qu'une tension existe entre les bras 1 et 2 ainsi qu'entre les bras 3 et 2.

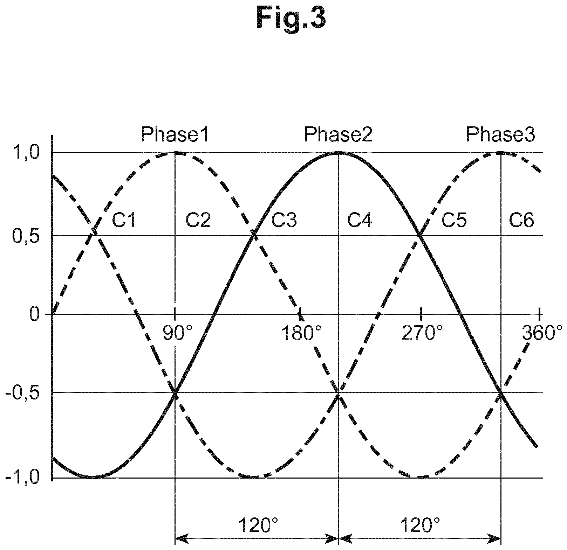

En référence à la figure 3, le procédé de calcul des rapports cycliques prend alors en compte trois cas distincts, liés aux valeurs de tensions de phases va, vb, vc, correspondant aux tensions des bras de commutation 1, 2, 3 : soit la tension du bras défaillant 2 est la plus élevée, cadrans C3 et C4, soit elle est la plus faible, cadrans C6 et C1, soit la tension du bras défaillant 2 est intermédiaire, cadrans C2 et C5.

Dans le cas de la tension intermédiaire, cadrans C2 et C5 de la figure 3, où la tension sur la phase b associée au bras de commutation défaillant 2 est située entre les tensions des bras fonctionnels, dans ce cas on applique, par une commande simultanée, les rapports cycliques calculés en fonction de l'équation suivante :

$$\alpha_{1H} = \alpha_{3L} = 1 - V_{13} / (2 * V_{DC})$$

Dans laquelle $\alpha_{1H}$ et $\alpha_{3L}$ sont respectivement les rapports cycliques à appliquer à l'interrupteur haut $M_{1H}$ du premier bras fonctionnel 1 et à l'interrupteur bas $M_{3L}$ du premier bras fonctionnel 1 ;

$V_{13}$ est la tension de commande, et
$V_{DC}$ est la valeur de tension continue mesurée.

En effet, dans ce cas intermédiaire, le bras de commutation défaillant 2 présente une tension intermédiaire entre les tensions des deux bras de commutation fonctionnels 1 et 3. Par conséquent, le bras défaillant 2 ne procure aucun chemin favorable à la circulation du courant (le courant venant toujours de la tension la plus élevée et retournant vers la tension la plus basse). Ce même raisonnement s'applique lorsque seul M1H est fermé ou seul M3L est fermé. Lorsque l'ensemble des interrupteurs est ouvert, il n'y a plus de chemin pour le courant, les selfs se vident.

Dans le cas de la tension la plus élevée, où la tension sur la phase b associée au bras de commutation défaillant 2 est supérieure aux tensions des bras fonctionnels 1 et 3, on considère deux sous-cas :

-    dans le cadran C3, la tension de phase $V_a$ du premier bras fonctionnel 1 est supérieure à la tension de phase $V_c$ du deuxième bras fonctionnel 3, et par conséquent la différence $V_a - V_c$ de tension entre la première valeur de tension de phase $V_a$ et la deuxième valeur de tension de phase $V_c$ est du même signe que la valeur de tension de commande $V_{13}$ ; et

-    dans le cadran C4, la tension de phase va du premier bras fonctionnel 1 est inférieure à la tension de phase vc du deuxième bras fonctionnel 3, et par conséquent la différence $V_a - V_c$ de tension entre la première valeur de tension de phase $V_a$ et la deuxième valeur de tension de phase $V_c$ est du signe opposé à la valeur de tension de commande $V_{13}$.

Dans le cas du cadran C3, on souhaite obtenir un courant $i_1$ dans le premier bras fonctionnel 1 positif ; car le signe de $i_1$ visé est le même que la tension de commande $V_{13}$.

Pour s'assurer qu'aucun courant ne soit puisé par le bras de commutation 2, il faut que le premier bras fonctionnel 1, qui présente la tension de phase la plus élevée, offre un chemin plus favorable au courant que la phase 2 (sachant que les interrupteurs de la phase 2 sont bloqués ouvert). Comme la phase 2 a une tension plus élevée que la phase 1, il ne faut pas ouvrir l'interrupteur M1H, dans le cas contraire, le courant viendrait de la phase 2 dont la tension est plus élevée.

De plus, avec l'interrupteur M1H fermé, il y a une condition pour que le chemin par le premier bras fonctionnel 1 soit favorable, il faut que $V_{DC}$ soit supérieur à V2-V1, aussi écrit $V_{21}$, durant toute la durée du cadran C3.

Dans le cadran C3, la valeur maximale de V2-V1 sur un réseau d'amplitude $V_R$ crête à crête est égale à 1.5*Vr, soit 487V sur un réseau triphasé typique européen de 230 Vrms phase-neutre.

Ainsi, pour que le système reste commandables, il faut que $V_{DC}$ soit au moins égale à ce seuil de tension, auquel il est possible de rajouter une marge, on s'assurera donc d'avoir une tension Vdc de 500V.

En fonctionnement nominal, la tension Vdc est régulée à 450V de sorte que la valeur proposée pour notre mode dégradé en est relativement proche.

On note que pour l'ensemble de l'exemple de réalisation, et quelque soit le cadran ou portion de période considérée, la tension Vdc de 500V est celle appliquée.

Par conséquent durant le cadran C3, le rapport cyclique de commande $\alpha_{3L}$ de l'interrupteur M3L est calculé de la façon suivante :

$$\alpha_{3L} = 1 - V_{13} / (V_{DC}) \; ;$$

et l'interrupteur haut $M_{1H}$ du premier bras fonctionnel 1 est maintenu fermé en permanence, soit le rapport cyclique $\alpha_{1H}$ = 1.

Dans le deuxième sous-cas, selon le cadran C4, par un raisonnement similaire en échangeant l'ordre des deux bras fonctionnels 1 et 3, le rapport cyclique de

commande sera donc :

$$\alpha_{1L} = 1 - V_{31}/(V_{DC})$$

Que l'on peut aussi écrire :

$$\alpha_{1L} = 1 + V_{13}/(V_{DC}) \; ;$$

et l'interrupteur haut M3H du deuxième bras fonctionnel restant alors fermé pendant tout le cadran C4, soit le rapport cyclique $\alpha_{3H} = 1$.

Enfin on considère le troisième cas, dit de la tension la plus faible, où la tension sur la phase b associée au bras de commutation défaillant 2 est inférieure aux tensions des bras fonctionnels 1 et 3, on considère deux sous-cas, par un raisonnement similaire au cas dit de la tension la plus forte :

- dans le cadran C1, la tension de phase $V_a$ du premier bras fonctionnel 1 est supérieure à la tension de phase $V_c$ du deuxième bras fonctionnel 3, et par conséquent la différence $V_a - V_c$ de tension entre la première valeur de tension de phase $V_a$ et la deuxième valeur de tension de phase $V_c$ est du même signe que la valeur de tension de commande $V_{13}$ ; et
- dans le cadran C6, la tension de phase $V_a$ du premier bras fonctionnel 1 est inférieure à la tension de phase $V_c$ du deuxième bras fonctionnel 3, et par conséquent la différence $V_a - V_c$ de tension entre la première valeur de tension de phase $V_a$ et la deuxième valeur de tension de phase $V_c$ est du signe opposé à la valeur de tension de commande $V_{13}$.

Dans cet exemple de réalisation, dans le sous-cas du cadran C1, la tension du bras défaillant 2 étant la plus faible, on ne peut pas ouvrir l'interrupteur M3L au risque de créer un chemin plus favorable par le bras défaillant 2.

On maintient donc l'interrupteur M3L fermé.

Lors de la fermeture de l'interrupteur M1H, le chemin de retour par le deuxième bras fonctionnel 3 reste favorable à la même condition de tension sur $V_{DC}$ que précédemment. Il faut donc également réguler $V_{DC}$ au-dessus de 487V dans ce cadran.

Par conséquent, dans le sous-cas du cadran C1, le rapport cyclique $\alpha_{1H}$ de commande est appliqué à l'interrupteur haut M1H du premier bras fonctionnel 1 selon l'équation suivante :

$$\alpha_{1H} = 1 - V_{13}/(V_{DC}) \; ;$$

avec l'interrupteur bas M3L du deuxième bras fonctionnel 3 maintenu fermé pendant toute la durée du cadran C1, soit le rapport cyclique $\alpha_{3L} = 1$.

De même pour le sous-cas du cadran C6 le rapport cyclique $\alpha_{3H}$ de commande est appliqué à l'interrupteur haut M3H du deuxième bras fonctionnel 3 selon l'équation suivante :

$$\alpha_{3H} = 1 - V_{31}/(V_{DC}) \; ;$$

Que l'on peut aussi écrire :

$$\alpha_{3H} = 1 + V_{13}/(V_{DC}) \; ;$$

et avec l'interrupteur bas $M_{1L}$ du premier bras fonctionnel 1 maintenu fermé pendant toute la durée du cadran C6, soit le rapport cyclique $\alpha_{1L} = 1$.

Ainsi, on peut augmenter la disponibilité du chargeur d'accumulateurs électriques d'un véhicule automobile sans rajouter de composante supplémentaire en permettant de charger un véhicule automobile sur un réseau triphasé, même en cas de défaillance partielle du redresseur de Vienne du chargeur.

**Revendications**

1. Procédé de commande d'un chargeur comportant un redresseur de Vienne triphasé (20) et un convertisseur courant continu-courant continu (12), le redresseur comprenant trois branches parallèles (1', 2', 3') comportant chacune deux diodes ($D_{1H}$, $D_{1L}$, $D_{2H}$, $D_{2L}$, $D_{3H}$, $D_{3L}$) et forment un pont triphasé, le redresseur comprenant aussi trois bras de commutation (1, 2, 3) associés chacun à une phase électrique (a, b, c), chaque bras de commutation (1, 2, 3) comprenant un interrupteur de puissance commandé haut ($M_{1H}$, $M_{2H}$, $M_{3H}$) monté en série et en opposition avec un interrupteur de puissance commandé bas ($M_{1L}$, $M_{2L}$, $M_{3L}$) ; le procédé comprenant lorsqu'un bras de commutation comprend un interrupteur défaillant ($M_{2H}$, $M_{2L}$) bloqué ouvert:

   - une étape de détermination du bras de commutation défaillant (2) comprenant ledit interrupteur défaillant ($M_{2H}$, $M_{2L}$), et des deux autres bras fonctionnels (1, 3) ;
   - une étape de réception d'une valeur de tension de commande ($V_{13}$), correspondant à une valeur de tension à appliquer entre les deux bras fonctionnels (1, 3);
   - une étape de maintien d'une valeur de tension continue ($V_{DC}$) de sortie du redresseur à une valeur supérieure à la différence de tension entre deux phases électriques en entrée dudit redresseur de Vienne triphasé ;
   - une étape de réception de la valeur de tension continue mesurée ($V_{DC}$) en sortie du redresseur;
   - une étape de calcul des rapports cycliques à appliquer aux interrupteurs commandés haut et bas des deux bras fonctionnels, en fonction de ladite valeur de tension de commande ($V_{13}$) et de ladite valeur de tension continue mesurée ($V_{DC}$); et

- une étape de commande comprenant l'application des rapports cycliques calculés au redresseur de Vienne triphasé (20), dans laquelle lorsque la phase électrique associée au bras de commutation comportant ledit interrupteur défaillant procure un chemin favorable au passage du courant sur un intervalle de temps, on maintient fermé pendant cet intervalle de temps, l'interrupteur conducteur du bras de commutation dont la tension de phase électrique associée est située entre les tensions des deux autres phases électriques.

2. Procédé selon la revendication 1, **caractérisé en ce qu'**on effectue en outre le calcul des rapports cycliques à appliquer aux interrupteurs commandés haut et bas en fonction de la comparaison d'une valeur de tension ($V_b$) de la phase (b) associée au bras de commutation défaillant (2) avec une première valeur de tension de phase ($V_a$), correspondant à la phase (a) associée au premier bras fonctionnel (1), et avec une deuxième valeur de tension de phase ($V_c$) correspondant à la phase (c) associée au deuxième bras fonctionnel (3).

3. Procédé selon la revendication 2, **caractérisé en ce que** lorsque la valeur de tension ($V_b$) de la phase (b) associée au bras de commutation défaillant (2) est comprise entre la première valeur de tension ($V_a$) et la deuxième valeur de tension ($V_c$), on applique simultanément un rapport cyclique $\alpha_{1H}$ à l'interrupteur haut ($M_{1H}$) du premier bras fonctionnel (1) et un rapport cyclique $\alpha_{3L}$ à l'interrupteur bas ($M_{3L}$) du deuxième bras fonctionnel (3), lesdits rapports cycliques sont fonction du rapport entre la tension de commande, $V_{13}$, et deux fois la tension continue mesurée, $V_{DC}$, tel que :

$$\alpha_{1H} = \alpha_{3L} = 1 - V_{13}/(2^* V_{DC})$$

4. Procédé selon la revendication 2 ou 3, **caractérisé en ce que**

lorsque la valeur de tension ($V_b$) de la phase (b) associée au bras de commutation défaillant (2) est supérieure aux première ($V_a$) et deuxième ($V_c$) valeurs de tension de phase, et lorsque la différence ($V_a$-$V_c$) de tension entre la première valeur de tension de phase ($V_a$) et la deuxième valeur de tension de phase ($V_c$) est du même signe que la valeur de tension de commande ($V_{13}$),

alors on applique à l'interrupteur bas ($M_{3L}$) du deuxième bras fonctionnel (3) un rapport cyclique, $\alpha_{3L}$, calculé de sorte qu'il soit fonction de rapport entre la tension de commande, $V_{13}$, et la tension continue mesurée, $V_{DC}$, de sorte que :

$$\alpha_{3L} = 1 - V_{13}/V_{DC} \; ;$$

tandis que l'interrupteur haut ($M_{1H}$) du premier bras fonctionnel (1) est maintenu fermé.

5. Procédé selon l'une quelconque des revendications 2 à 4, **caractérisé en ce que**

lorsque la valeur de tension ($V_b$) de la phase (b) associée au bras de commutation défaillant (2) est supérieure aux première ($V_a$) et deuxième ($V_c$) valeurs de tension de phase, et lorsque la différence ($V_a$-$V_c$) de tension entre la première valeur de tension de phase ($V_a$) et la deuxième valeur de tension de phase ($V_c$) est du signe opposé à la valeur de tension de commande ($V_{13}$),

alors on applique à l'interrupteur bas ($M_{1L}$) du premier bras fonctionnel (1) un rapport cyclique, $\alpha_{1L}$, calculé de sorte qu'il soit fonction du rapport entre la tension de commande, $V_{13}$, et la tension continue mesurée, $V_{DC}$, de sorte que :

$$\alpha_{1L} = 1 + V_{13}/V_{DC};$$

tandis que l'interrupteur haut ($M_{3H}$) du deuxième bras fonctionnel (3) est maintenu fermé.

6. Procédé selon l'une quelconque des revendications 2 à 5, **caractérisé en ce que**

lorsque la valeur de tension ($V_b$) de la phase (b) associée au bras de commutation défaillant (2) est inférieure aux première ($V_a$) et deuxième ($V_c$) valeurs de tension de phase, et lorsque la différence ($V_a$-$V_c$) de tension entre la première valeur de tension de phase ($V_a$) et la deuxième valeur de tension de phase ($V_c$) est du même signe que la valeur de tension de commande ($V_{13}$),

alors on applique à l'interrupteur haut ($M_{1H}$) du premier bras fonctionnel (1) un rapport cyclique, $\alpha_{1H}$, calculé de sorte qu'il soit fonction du rapport entre la tension de commande, $V_{13}$, et la tension continue mesurée, $V_{DC}$, de sorte que :

$$\alpha_{1H} = 1 - V_{13}/V_{DC} \; ;$$

tandis que l'interrupteur bas ($M_{3L}$) du deuxième bras fonctionnel (3) est maintenu fermé.

**7.** Procédé selon l'une quelconque des revendications 2 à 6, **caractérisé en ce que**

lorsque la valeur de tension ($V_b$) de la phase (b) associée au bras de commutation défaillant (2) est inférieure aux première ($V_a$) et deuxième ($V_c$) valeurs de tension de phase, et

lorsque la différence ($V_a$-$V_c$) de tension entre la première valeur de tension de phase ($V_a$) et la deuxième valeur de tension de phase ($V_c$) est du signe opposé à la valeur de tension de commande ($V_{13}$),

alors on applique à l'interrupteur haut ($M_{3H}$) du deuxième bras fonctionnel (3) un rapport cyclique, $\alpha_{3L}$, calculé de sorte qu'il soit fonction du rapport entre la tension de commande, $V_{13}$, et la tension continue mesurée, $V_{DC}$, de sorte que :

$$\alpha_{3L} = 1 + V_{13}/V_{DC} \; ;$$

tandis que l'interrupteur bas (M1L) du premier bras fonctionnel (1) est maintenu fermé.

**8.** Dispositif de commande d'un chargeur comportant un redresseur de Vienne triphasé (20) et un convertisseur courant continu - courant continu (12), le redresseur comprenant trois branches parallèles (1', 2', 3') comportant chacune deux diodes ($D_{1H}$, $D_{1L}$, $D_{2H}$, $D_{2L}$, $D_{3H}$, $D_{3L}$) et forment un pont triphasé, le redresseur comprenant aussi trois bras de commutation (1, 2, 3) associés chacun à une phase électrique (a, b, c), chaque bras de commutation (1, 2, 3) comprenant un interrupteur de puissance commandé haut ($M_{1H}$, $M_{2H}$, $M_{3H}$) monté en série et en opposition avec un interrupteur de puissance commandé bas ($M_{1L}$, $M_{2L}$, $M_{3L}$), le dispositif comprenant :

- des moyens de détermination d'un bras de commutation défaillant (2) comprenant un interrupteur défaillant ($M_{2H}$, $M_{2L}$), et des deux autres bras fonctionnels (1, 3) ;
- des moyens de réception d'une valeur de tension de commande ($V_{13}$) correspondant à une valeur de tension à appliquer entre les deux bras fonctionnels (1, 3);
- des moyens de réception de la valeur de tension continue mesurée ($V_{DC}$) en sortie du redresseur;
- des moyens de calcul des rapports cycliques à appliquer aux interrupteurs commandés haut et bas des deux bras fonctionnels, en fonction de ladite valeur de tension de commande ($V_{13}$) et de ladite valeur de tension continue mesurée ($V_{DC}$) ;
- des moyens pour commander l'application des rapports cycliques calculés au redresseur de Vienne triphasé (20) ;
- et des moyens pour, lorsque la phase électrique associée au bras de commutation comportant ledit interrupteur défaillant procure un chemin favorable au passage du courant sur un intervalle de temps, maintenir fermé, pendant cet intervalle de temps, l'interrupteur conducteur du bras de commutation dont la tension de phase électrique associée est située entre les tensions des deux autres phases électriques.

**9.** Chargeur d'accumulateur électrique destiné à être connecté à un réseau électrique triphasé, comprenant une impédance de ligne destinée à être connectée au réseau triphasé, un premier convertisseur AC-DC comprenant un redresseur de Vienne triphasé, un deuxième convertisseur DC-DC connecté à une batterie d'accumulateurs électrique, et un dispositif de commande dudit chargeur selon la revendication 8.

**10.** Véhicule automobile comprenant un chargeur d'accumulateur électrique selon la revendication 9.

**Patentansprüche**

**1.** Verfahren zum Steuern eines Ladegeräts, das einen dreiphasigen Vienna-Gleichrichter (20) und einen Gleichstrom-Gleichstrom-Wandler (12) aufweist, wobei der Gleichrichter drei parallele Zweige (1', 2', 3') enthält, die je zwei Dioden ($D_{1H}$, $D_{1L}$, $D_{2H}$, $D_{2L}$, $D_{3H}$, $D_{3L}$) aufweisen und eine Dreiphasenbrücke formen, wobei der Gleichrichter auch drei Schaltarme (1, 2, 3) enthält, die je einer elektrischen Phase (a, b, c) zugeordnet sind, wobei jeder Schaltarm (1, 2, 3) einen oberen gesteuerten Leistungsschalter ($M_{1H}$, $M_{2H}$, $M_{3H}$) enthält, der in Reihe mit und gegenphasig zu einem unteren gesteuerten Leistungsschalter ($M_{1L}$, $M_{2L}$, $M_{3L}$) montiert ist; wobei das Verfahren enthält, wenn ein Schaltarm einen offenen blockierten defekten Schalter ($M_{2H}$, $M_{2L}$) enthält:

- einen Schritt der Bestimmung des defekten Schaltarms (2), der den defekten Schalter ($M_{2H}$, $M_{2L}$) enthält, und der zwei anderen funktionsfähigen Arme (1, 3);
- einen Schritt des Empfangs eines Steuerspannungswerts ($V_{13}$) entsprechend einem zwischen den zwei funktionsfähigen Armen (1, 3) anzuwendenden Spannungswert;
- einen Schritt des Halts eines Ausgangs-Gleichspannungswerts ($V_{DC}$) des Gleichrichters auf einem Wert höher als die Spannungsdifferenz zwischen zwei elektrischen Phasen am Eingang des dreiphasigen Vienna-Gleichrichters;

- einen Schritt des Empfangs des am Ausgang des Gleichrichters gemessenen Gleichspannungswerts ($V_{DC}$);

- einen Schritt der Berechnung von an die oberen und unteren gesteuerten Schalter der zwei funktionsfähigen Arme anzuwendenden Tastverhältnissen, abhängig vom Steuerspannungswert ($V_{13}$) und vom gemessenen Gleichspannungswert ($V_{DC}$) ; und

- einen Steuerschritt, der die Anwendung der berechneten Tastverhältnisse an den dreiphasigen Vienna-Gleichrichter (20) enthält, bei dem, wenn die dem den defekten Schalter aufweisenden Schaltarm zugeordnete elektrische Phase einen für den Durchgang des Stroms über einen Zeitraum günstigen Weg liefert, während dieses Zeitraums der leitende Schalter des Schaltarms geschlossen gehalten wird, dessen zugeordnete elektrische Phasenspannung sich zwischen den Spannungen der beiden anderen elektrischen Phasen befindet.

2. Verfahren nach Anspruch 1, **dadurch gekennzeichnet, dass** außerdem die Berechnung der an die oberen und unteren gesteuerten Schalter anzuwendenden Tastverhältnisse abhängig vom Vergleich eines Spannungswerts ($V_b$) der dem defekten Schaltarm (2) zugeordneten Phase (b) mit einem ersten Phasenspannungswert ($V_a$) entsprechend der dem ersten funktionsfähigen Arm (1) zugeordneten Phase (a) und mit einem zweiten Phasenspannungswert ($V_c$) entsprechend der dem zweiten funktionsfähigen Arm (3) zugeordneten Phase (c) ausgeführt wird.

3. Verfahren nach Anspruch 2, **dadurch gekennzeichnet, dass**, wenn der Spannungswert ($V_b$) der dem defekten Schaltarm (2) zugeordneten Phase (b) zwischen dem ersten Spannungswert ($V_a$) und dem zweiten Spannungswert ($V_c$) liegt, gleichzeitig ein Tastverhältnis $\alpha_{1H}$ an den oberen Schalter ($M_{1H}$) des ersten funktionsfähigen Arms (1) und ein Tastverhältnis $\alpha_{3L}$ an den unteren Schalter ($M_{3L}$) des zweiten funktionsfähigen Arms (3) angewendet wird, wobei die Tastverhältnisse vom Verhältnis zwischen der Steuerspannung $V_{13}$ und dem Doppelten der gemessenen Gleichspannung $V_{DC}$ abhängen, derart, dass gilt:

$$\alpha_{1H} \ = \ \alpha_{3L} \ = \ 1 - V_{13}/\,(2 \star V_{DC})$$

4. Verfahren nach Anspruch 2 oder 3, **dadurch gekennzeichnet, dass**,

wenn der Spannungswert ($V_b$) der dem defekten Schaltarm (2) zugeordneten Phase (b) höher ist als der erste ($V_a$) und zweite ($V_c$) Phasenspannungswert, und
wenn die Spannungsdifferenz ($V_a$-$V_c$) zwischen dem ersten Phasenspannungswert ($V_a$) und dem zweiten Phasenspannungswert ($V_c$) das gleiche Vorzeichen hat wie der Steuerspannungswert ($V_{13}$),
an den unteren Schalter ($M_{3L}$) des zweiten funktionsfähigen Arms (3) ein Tastverhältnis $\alpha_{3L}$ angewendet wird, das so berechnet wird, dass es vom Verhältnis zwischen der Steuerspannung $V_{13}$ und der gemessenen Gleichspannung $V_{DC}$ abhängt, so dass gilt:

$$\alpha_{3L} \ = \ 1 - V_{13}/V_{DC};$$

während der obere Schalter ($M_{1H}$) des ersten funktionsfähigen Arms (1) geschlossen gehalten wird.

5. Verfahren nach einem der Ansprüche 2 bis 4, **dadurch gekennzeichnet, dass**

wenn der Spannungswert ($V_b$) der dem defekten Schaltarm (2) zugeordneten Phase (b) höher ist als der erste ($V_a$) und der zweite ($V_c$) Phasenspannungswert, und
wenn die Spannungsdifferenz ($V_a$-$V_c$) zwischen dem ersten Phasenspannungswert ($V_a$) und dem zweiten Phasenspannungswert ($V_c$) das dem Steuerspannungswert ($V_{13}$) entgegengesetzte Vorzeichen hat,
an den unteren Schalter ($M_{1L}$) des ersten funktionsfähigen Arms (1) ein Tastverhältnis $\alpha_{1L}$ angewendet wird, das so berechnet wird, dass es vom Verhältnis zwischen der Steuerspannung $V_{13}$ und der gemessenen Gleichspannung $V_{DC}$ abhängt, so dass gilt:

$$\alpha_{1L} \ = \ 1 + V_{13}/V_{DC};$$

während der obere Schalter ($M_{3H}$) des zweiten funktionsfähigen Arms (3) geschlossen gehalten wird.

6. Verfahren nach einem der Ansprüche 2 bis 5, **dadurch gekennzeichnet, dass**

wenn der Spannungswert ($V_b$) der dem defekten Schaltarm (2) zugeordneten Phase (b) niedriger ist als der erste ($V_a$) und zweite ($V_c$) Phasenspannungswert, und
wenn die Spannungsdifferenz ($V_a$-$V_c$) zwischen dem ersten Phasenspannungswert ($V_a$) und dem zweiten Phasenspannungswert ($V_c$) das gleiche Vorzeichen hat wie der Steuerspannungswert ($V_{13}$),

an den oberen Schalter ($M_{1H}$) des ersten funktionsfähigen Arms (1) ein Tastverhältnis $\alpha_{1H}$ angewendet wird, das so berechnet wird, dass es vom Verhältnis zwischen der Steuerspannung $V_{13}$ und der gemessenen Gleichspannung $V_{DC}$ abhängt, so dass gilt:

$$\alpha_{1H} = 1 - V_{13}/V_{DC};$$

während der untere Schalter ($M_{3L}$) des zweiten funktionsfähigen Arms (3) geschlossen gehalten wird.

7. Verfahren nach einem der Ansprüche 2 bis 6, **dadurch gekennzeichnet, dass**

wenn der Spannungswert ($V_b$) der dem defekten Schaltarm (2) zugeordneten Phase (b) niedriger ist als der erste ($V_a$) und zweite ($V_c$) Phasenspannungswert, und
wenn die Spannungsdifferenz ($V_a$-$V_c$) zwischen dem ersten Phasenspannungswert ($V_a$) und dem zweiten Phasenspannungswert ($V_c$) das dem Steuerspannungswert ($V_{13}$) entgegengesetzte Vorzeichen hat,
an den oberen Schalter ($M_{3H}$) des zweiten funktionsfähigen Arms (3) ein Tastverhältnis $\alpha_{3L}$ angewendet wird, das so berechnet wird, dass es vom Verhältnis zwischen der Steuerspannung $V_{13}$ und der gemessenen Gleichspannung $V_{DC}$ abhängt, so dass gilt:

$$\alpha_{3L} = 1 + V_{13}/V_{DC};$$

während der untere Schalter ($M_{1L}$) des ersten funktionsfähigen Arms (1) geschlossen gehalten wird.

8. Steuervorrichtung eines Ladegeräts, das einen dreiphasigen Vienna-Gleichrichter (20) und einen Gleichstrom-Gleichstrom-Wandler (12) aufweist, wobei der Gleichrichter auch drei parallele Zweige (1', 2', 3') enthält, die je zwei Dioden ($D_{1H}$, $D_{1L}$, $D_{2H}$, $D_{2L}$, $D_{3H}$, $D_{3L}$) aufweisen und eine Dreiphasenbrücke formen, wobei der Gleichrichter drei Schaltarme (1, 2, 3) enthält, die je einer elektrischen Phase (a, b, c) zugeordnet sind, wobei jeder Schaltarm (1, 2, 3) einen oberen gesteuerten Leistungsschalter ($M_{1H}$, $M_{2H}$, $M_{3H}$) enthält, der in Reihe mit und gegenphasig zu einem unteren gesteuerten Leistungsschalter ($M_{1L}$, $M_{2L}$, $M_{3L}$) montiert ist, wobei die Vorrichtung enthält:

- Einrichtungen zur Bestimmung eines defekten Schaltarms (2), der einen defekten Schalter ($M_{2H}$, $M_{2L}$) enthält, und der zwei anderen funktionsfähigen Arme (1, 3);
- Einrichtungen zum Empfang eines Steuerspannungswerts ($V_{13}$) entsprechend einem zwischen den zwei funktionsfähigen Armen (1, 3) anzuwendenden Spannungswert;
- Einrichtungen zum Empfang des gemessenen Gleichspannungswerts ($V_{DC}$) am Ausgang des Gleichrichters;
- Einrichtungen zur Berechnung der an die oberen und unteren gesteuerten Schalter der zwei funktionsfähigen Arme anzuwendenden Tastverhältnisse, abhängig vom Steuerspannungswert ($V_{13}$) und vom gemessenen Gleichspannungswert ($V_{DC}$);
- Einrichtungen zum Steuern der Anwendung der berechneten Tastverhältnisse an den dreiphasigen Vienna-Gleichrichter (20);
- und Einrichtungen um, wenn die dem den defekten Schalter aufweisenden Schaltarm zugeordnete elektrische Phase einen für den Durchgang des Stroms über einen Zeitraum günstigen Weg liefert, während dieses Zeitraums den leitenden Schalter des Schaltarms geschlossen zu halten, dessen zugeordnete elektrische Phasenspannung sich zwischen den Spannungen der beiden anderen elektrischen Phasen befindet.

9. Ladegerät eines elektrischen Akkumulators, das dazu bestimmt ist, mit einem dreiphasigen Stromnetz verbunden zu werden, das eine Leitungsimpedanz, die dazu bestimmt ist, mit dem dreiphasigen Netz verbunden zu werden, einen ersten AC-DC-Wandler, der einen dreiphasigen Vienna-Gleichrichter enthält, einen zweiten DC-DC-Wandler, der mit einer elektrischen Akkumulatorenbatterie verbunden ist, und eine Steuervorrichtung des Ladegeräts nach Anspruch 8 enthält.

10. Kraftfahrzeug, das ein Ladegerät eines elektrischen Akkumulators nach Anspruch 9 enthält.

## Claims

1. Method for controlling a three-phase Vienna rectifier (20) and a DC-to-DC converter (12), the rectifier comprising three parallel branches (1', 2', 3') each comprising two diodes ($D_{1H}$, $D_{1L}$, $D_{2H}$, $D_{2L}$, $D_{3H}$, $D_{3L}$) and forming a three-phase bridge, the rectifier also comprising three switching arms (1, 2, 3) each associated with an electrical phase (a, b, c), each switching arm (1, 2, 3) comprising a high controlled power switch ($M_{1H}$, $M_{2H}$, $M_{3H}$), connected in series and in opposition with a low controlled power switch ($M_{1L}$, $M_{2L}$, $M_{3L}$); the method comprising, when a switching arm comprises a faulty switch ($M_{2H}$, $M_{2L}$) that is blocked in the open state:

- a step of identifying the faulty switching arm (2) comprising said faulty switch ($M_{2H}$, $M_{2L}$), and the other two functional arms (1, 3);

- a step of receiving a control voltage value ($V_{13}$), corresponding to a voltage value to be applied between the two functional arms (1, 3);

- a step of keeping a value of output DC voltage ($V_{DC}$) of the rectifier at a value higher than the voltage difference between two electrical phases at the input of said three-phase Vienna rectifier;

- a step of receiving the DC voltage value ($V_{DC}$) as measured at the output of the rectifier;

- a step of calculating the duty cycles to be applied to the high and low controlled switches of the two functional arms, on the basis of said control voltage value ($V_{13}$) and said measured DC voltage value ($V_{DC}$); and

- a control step comprising the application of the calculated duty cycles to the three-phase Vienna rectifier (20), in which, when the electrical phase associated with the switching arm comprising said faulty switch provides a path favourable to the flow of current during a time interval, the conducting switch of the switching arm of which the associated electrical phase voltage is situated between the voltages of the two other electrical phases is kept closed during this time interval.

2. Method according to Claim 1, **characterized in that** the duty cycles to be applied to the high and low controlled switches are also calculated, on the basis of the comparison of a voltage value ($V_b$) of the phase (b) associated with the faulty switching arm (2) with a first phase voltage value ($V_a$), corresponding to the phase (a) associated with the first functional arm (1), and with a second phase voltage value ($V_c$) corresponding to the phase (c) associated with the second functional arm (3).

3. Method according to Claim 2, **characterized in that**, when the voltage value ($V_b$) of the phase (b) associated with the faulty switching arm (2) is between the first voltage value ($V_a$) and the second voltage value ($V_c$), a duty cycle $\alpha_{1H}$ is applied to the high switch ($M_{1H}$) of the first functional arm (1) and a duty cycle $\alpha_{3L}$ is applied to the low switch ($M_{3L}$) of the second functional arm (3) simultaneously, said duty cycles being a function of the ratio between the control voltage, $V_{13}$, and twice the measured DC voltage, $V_{DC}$, such that:

$$\alpha_{1H} = \alpha_{3L} = 1 - V_{13} / (2 * V_{DC})$$

4. Method according to Claim 2 or 3, **characterized in that**:

when the voltage value ($V_b$) of the phase (b) associated with the faulty switching arm (2) is higher than the first ($V_a$) and second ($V_c$) phase voltage values, and when the voltage difference ($V_a$-$V_c$) between the first phase voltage value ($V_a$) and the second phase voltage value ($V_c$) is of the same sign as the control voltage value ($V_{13}$),

then a duty cycle, $\alpha_{3L}$, is applied to the low switch ($M_{3L}$) of the second functional arm (3), this duty cycle being calculated so that it is a function of the ratio between the control voltage, $V_{13}$, and the measured DC voltage, $V_{DC}$, so that:

$$\alpha_{3L} = 1 - V_{13} / V_{DC};$$

while the high switch ($M_{1H}$) of the first functional arm (1) is kept closed.

5. Method according to any one of Claims 2 to 4, **characterized in that**:

when the voltage value ($V_b$) of the phase (b) associated with the faulty switching arm (2) is higher than the first ($V_a$) and second ($V_c$) phase voltage values, and

when the voltage difference ($V_a$-$V_c$) between the first phase voltage value ($V_a$) and the second phase voltage value ($V_c$) is of the opposite sign to the control voltage value ($V_{13}$),

then a duty cycle, $\alpha_{1L}$, is applied to the low switch ($M_{1L}$) of the first functional arm (1), this duty cycle being calculated so that it is a function of the ratio between the control voltage, $V_{13}$, and the measured DC voltage, $V_{DC}$, so that:

$$\alpha_{1L} = 1 + V_{13} / V_{DC};$$

while the high switch ($M_{3H}$) of the second functional arm (3) is kept closed.

6. Method according to any one of Claims 2 to 5, **characterized in that**:

when the voltage value ($V_b$) of the phase (b) associated with the faulty switching arm (2) is lower than the first ($V_a$) and second ($V_c$) phase voltage values, and

when the voltage difference ($V_a$-$V_c$) between the first phase voltage value ($V_a$) and the second phase voltage value ($V_c$) is of the same sign as the control voltage value ($V_{13}$),

then a duty cycle, $\alpha_{1H}$, is applied to the high switch ($M_{1H}$) of the first functional arm (1), this duty cycle being calculated so that it is a function of the ratio between the control voltage, $V_{13}$, and

the measured DC voltage, $V_{DC}$, so that:

$$\alpha_{1H} = 1 - V_{13} / V_{DC};$$

while the low switch ($M_{3L}$) of the second functional arm (3) is kept closed.

7. Method according to any one of Claims 2 to 6, **characterized in that**:

when the voltage value ($V_b$) of the phase (b) associated with the faulty switching arm (2) is lower than the first ($V_a$) and second ($V_c$) phase voltage values, and
when the voltage difference ($V_a$-$V_c$) between the first phase voltage value ($V_a$) and the second phase voltage value ($V_c$) is of the opposite sign to the control voltage value ($V_{13}$),
then a duty cycle, $\alpha_{3L}$, is applied to the high switch ($M_{3H}$) of the second functional arm (3), this duty cycle being calculated so that it is a function of the ratio between the control voltage, $V_{13}$, and the measured DC voltage, $V_{DC}$, so that:

$$\alpha_{3L} = 1 + V_{13} / V_{DC};$$

while the low switch ($M_{1L}$) of the first functional arm (1) is kept closed.

8. Device for controlling a charger comprising a three-phase Vienna rectifier (20) and a DC-to-DC converter (12), the rectifier comprising three parallel branches (1', 2', 3') each comprising two diodes ($D_{1H}$, $D_{1L}$, $D_{2H}$, $D_{2L}$, $D_{3H}$, $D_{3L}$) and forming a three-phase bridge, the rectifier also comprising three switching arms (1, 2, 3) each associated with an electrical phase (a, b, c), each switching arm (1, 2, 3) comprising a high controlled power switch ($M_{1H}$, $M_{2H}$, $M_{3H}$), connected in series and in opposition with a low controlled power switch ($M_{1L}$, $M_{2L}$, $M_{3L}$), the device comprising:

- means for identifying a faulty switching arm (2) comprising a faulty switch ($M_{2H}$, $M_{2L}$), and the other two functional arms (1, 3);
- means for receiving a control voltage value ($V_{13}$) corresponding to a voltage value to be applied between the two functional arms (1, 3);
- means for receiving the DC voltage value ($V_{DC}$) as measured at the output of the rectifier;
- means for calculating the duty cycles to be applied to the high and low controlled switches of the two functional arms, on the basis of said control voltage value ($V_{13}$) and said measured DC voltage value ($V_{DC}$);
- means for controlling the application of the calculated duty cycles to the three-phase Vienna rectifier (20); and
- means for, when the electrical phase associated with the switching arm comprising said faulty switch provides a path favourable to the flow of current during a time interval, keeping the conducting switch of the switching arm of which the associated electrical phase voltage is situated between the voltages of the two other electrical phases closed during this time interval.

9. Electrical accumulator charger designed to be connected to a three-phase electrical grid, comprising a line impedance designed to be connected to the three-phase grid, a first AC-to-DC converter comprising a three-phase Vienna rectifier, a second DC-to-DC converter connected to an electrical accumulator battery, and a device for controlling said charger according to Claim 8.

10. Motor vehicle comprising an electrical accumulator charger according to Claim 9.

**Fig.1**

10

30       40       13       20       12

Chargeur

Réseau électrique       Impédance de ligne       Input Filter       PFC       DC/DC       Batterie 400V

**Fig.2**

# Fig.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 104811061
- EP 94120245 A

- US 9293909 B

**Littérature non-brevet citée dans la description**

- **DE EDUARDO DE OLIVEIRA.** Comparative évaluation of three-phase PFC rectifiers for mains interfacing of on-board electric vehicle battery charging systems. IEEE
- **P. IDE.** Opération of a three-phase/three-level rectifier in wide range and single-phase applications. IEEE

- **F. STÔGERER.** Implementation of a novel control concept for reliable opération of a VIENNA rectifier under heavily unbalanced mains voltage conditions. IEEE
- **J. LEE ; U. CHOI ; K. LEE.** Comparison of Tolerance Controls for Open-Switch Fault in a Grid-Connected T-Type Rectifier. *IEEE Transactions on Power Electronics,* Octobre 2015, vol. 30 (10), 5810-5820